# EUROPÄISCHE PATENTSCHRIFT

(11) **EP 3 622 595 B1**
(45) Veröffentlichungstag und Bekanntmachung des Hinweises auf die Patenterteilung: **03.07.2024**
(21) Anmeldenummer: 18722017.3
(22) Anmeldetag: 02.05.2018
(51) Int. Cl.: H01T 2/02, H01T 4/02, H02H 9/06, H01T 4/12, H01T 1/10

(54) **GEKAPSELTER ÜBERSPANNUNGSABLEITER AUF FUNKENSTRECKENBASIS**
ENCAPSULATED SPARK-GAP BASED SURGE VOLTAGE PROTECTOR
PARASURTENSEUR ENCAPSULÉ À ÉCLATEUR

(30) Priorität: 10.05.2017 DE 102017110158; 23.08.2017 DE 102017119288
(43) Veröffentlichungstag der Anmeldung: 18.03.2020
(73) Patentinhaber: DEHN SE, 92318 Neumarkt i.d. OPf. (DE)
(72) Erfinder: EHRHARDT, Arnd, 92318 Neumarkt / Opf. (DE)
(74) Vertreter: Prinz & Partner mbB
(86) Internationale Anmeldenummer: PCT/EP2018/061090
(87) Internationale Veröffentlichungsnummer: WO 2018/206345

(56) Entgegenhaltungen:
- DE-A1- 10 164 025
- DE-A1-102004 006 988
- DE-A1-102007 002 429
- DE-B3- 10 245 144
- DE-U1-202015 100 397
- DE-U1-202015 100 397
- DE-U1-202016 105 144
- DE-U1-202016 105 144

## Beschreibung

Die Erfindung betrifft einen gekapselten Überspannungsableiter auf Funkenstreckenbasis mit zwei, mindestens teilweise gegenüberliegenden Hauptelektroden sowie mindestens einer Trigger- oder Zündhilfselektrode sowie einer zwischen den Hauptelektroden vorhandenen Lichtbogenbrennkammer nach Patentanspruch 1 und ein Verfahren zur Dimensionierung eines Lichtbogenkanals für einen folgestromfreien Überspannungsableiter gemäß der Lehre nach Patentanspruch 14.

Es ist bekannt, Überspannungsschutzgeräte in elektrischen und informationstechnischen Systemen und Netzen zum Schutz der Anlagen von Verbrauchern oder Endgeräten einzusetzen.

Überspannungsschutzgeräte begrenzen insbesondere bei transienten Überspannungen, zum Beispiel Blitzereignissen, die Spannung auf unkritische Werte.

Die Begrenzung erfolgt bei Überspannungsereignissen durch die Ableitung von Impulsströmen im Querpfad und damit im Allgemeinen parallel zu den Verbraucheranschlüssen. Als Überspannungsschutzgeräte und dort eingesetzte Schutzelemente sind Funkenstrecken, Varistoren, Suppressordioden, Gasableiter, Kapazitäten und nicht-lineare Widerstände sowie deren Kombinationen bekannt.

Überspannungsschutzgeräte auf der Basis von Funkenstrecken besitzen ein hohes Ableitvermögen und können Verbraucher bei Blitzimpulsen von mehreren 10 kA erfolgreich schützen.

Durch Triggerschaltungen kann der Schutzpegel von Überspannungsschutzgeräten auf Funkenstreckenbasis bis auf ca. 1 kV selbst bei hohen Belastungen reduziert werden, so dass sich ein ähnliches Schutzniveau wie bei leistungsschwächeren Varistoren erreichen lässt.

Einfache Funkenstrecken mit niedrigem Schutzpegel besitzen allerdings den Nachteil, dass nach Ableitung von Impulsströmen ein netzfrequenter Folgestrom auftreten kann. Dieser Folgestrom führt in einem Verbrauchernetz zu unerwünschten Störungen und kann in Netzen mit geringer Nennstromstärke zum unerwünschten Auslösen von Überstromschutzorganen oder weiteren Überwachungseinrichtungen führen.

Zur Lösung dieser Folgestromproblematik sind im Stand der Technik unterschiedliche Ansätze zu finden.

So zeigen die DE 102 11 795 A1, die DE 199 52 004 A1 und die DE 102 45 144 B3 Triggerschaltungen für Funkenstrecken zur Realisierung eines niedrigen Schutzpegels, welche gleichzeitig das Zünden der Hauptentladungsstrecke der Funkenstrecke bis zu energiereichen Störgrößen im Unterschied zu einfachen Triggerschaltungen ohne eigene Impulsstromfähigkeit verhindern.

Durch eine solche Maßnahme wird bei energiearmen Belastungen das Entstehen netzfrequenter Folgeströme vermieden und es wird eine entsprechend ausgerüstete Funkenstrecke vor zusätzlichen und unnötigen Belastungen geschützt.

Speziell zeigt die DE 102 45 144 B3 eine Überspannungs-Schutzanordnung mit einer Funkenstrecke als Grobschutzelement, mit zwei Haupt- und einer Hilfselektrode, wobei die Hilfselektrode mit einer als Feinschutz wirkenden Zündeinrichtung in Verbindung steht. Die Zündeinrichtung weist mindestens einen nichtlinearen temperaturabhängigen Widerstand auf, der ein Einstellen des Zünd- und Löschverhaltens der Funkenstrecke ermöglicht.

Die DE 102 11 795 A1 offenbart eine komplexe Bewertung der jeweiligen Störgröße in einem vollständig separaten, parallelen Ableitpfad. Eine Ionisierung in der eigentlichen Funkenstrecke erfolgt erst nach Auswertung der Störgröße.

Eine ähnliche Lösungsrichtung zeigt die DE 199 52 004 A1. Diese Druckschrift offenbart darüber hinaus die Möglichkeit, eine Hilfsfunkenstrecke in der Hauptfunkenstrecke unmittelbar zu aktivieren und die Zündung der Hauptfunkenstrecke von der Dauer oder der Höhe der Ionisierung der Teilfunkenstrecke abhängig zu gestalten.

Nach der DE 10 2004 006 988 A1 oder der DE 101 40 950 A1 ist es bekannt, eine Verlagerung der Hilfsentladung in teilweise von der Hauptentladungsstrecke abgeschottete bzw. zurückgesetzte Räume vorzunehmen. Bei der Zündung der Hauptentladungsstrecke ist jedoch das Auftreten von netzfrequenten Folgeströmen weiterhin möglich.

Zur Begrenzung oder Vermeidung von Netzfolgeströmen in Funkenstrecken sei beispielsweise auf die DE 10 2011 102 864 A1 verwiesen. Dort ist eine Stapelanordnung zur sicheren Vermeidung von Folgeströmen beschrieben. Hierbei werden so viele Einzelfunkenstrecken in Reihe geschalten, dass die Summe der Anoden- und Kathodenfallspannung bereits über der Netzspannung liegt. Nachteilig ist hier der Aufwand zur Realisierung eines niedrigen Schutzpegels und der hohe Platzbedarf.

Die DE 196 55 119 A1 offenbart eine Funkenstrecke, bei welcher der Netzfolgestrom in einer gekapselten Anordnung eine Druckerhöhung bewirkt und dieser Druckaufbau den Folgestrom begrenzt.

Gemäß der DE 101 64 025 A1 wird der Folgestrom durch die Einengung des Lichtbogens in einem Kanal und die zusätzliche Gasabgabe des Kanalmaterials stark begrenzt. Weiterhin ist die Verlängerung des Lichtbogens durch eine gezielte Gasströmung möglich. Zusammenhänge zwischen Impulsstromtragfähigkeit, dem Folgestromverhalten und der mechanischen bzw. thermischen Belastung von Funkenstrecken bei Verwendung von Hartgas sind in dieser Druckschrift dargelegt.

Grundsätzlich kann die Vermeidung von Folgeströmen bei Funkenstrecken mit hoher Impulsstromtragfähigkeit mit der Ausnahme aufwändiger Stapelfunkenstrecken kaum sichergestellt werden.

Bei der Auslegung einer Funkenstrecke sind die Nennspannung des Netzes, der prospektive Netzkurzschlussstrom aber auch die maximale Impulsstrombelastung bekannt. Bei Funkenstrecken mit niedrigem Schutzpegel sind die Ursachen für das Aktivieren der Funkenstrecke jedoch sehr unterschiedlich und nicht zwingend an Überspannungen mit hohen Energieinhalten gekoppelt. Somit sind die Höhe, die Dauer und die Wellenform der Impulsströme sehr unterschiedlich.

Bei Funkenstrecken entsprechend der DE 101 64 025 A1 sind die mechanischen und thermischen Belastungen bei den maximalen Blitzstrombelastungen am Höchsten. Dies betrifft insbesondere die Geometrie und die Materialien der Lichtbogenkammer. Die Gestaltung der Lichtbogenkammer ist jedoch auch für die Begrenzung bzw. Vermeidung von Folgeströmen von entscheidender Bedeutung. Eine Optimierung für Höchstimpulsbelastung wirkt sich im Allgemeinen negativ für die Begrenzung oder Vermeidung von Folgeströmen aus.

Die DE 10 2007 002 429 A1 zeigt einen gekapselten Überspannungsableiter, der zwei gegenüberliegende Hauptelektroden und mindestens einen Distanzkörper mit mehreren parallel verlaufenden Kanälen, Ringspalten oder Nuten aufweist, wobei der Distanzkörper ein gasabgebendes Material aufweisen kann.

Die DE 20 2016 105 144 U1 offenbart einen Überspannungsableiter zum Einsetzen in der Stromversorgung von Niederspannungsnetzung mit zwei gegenüberliegenden Elektroden und einer dazwischen liegenden Lichtbogenbrennkammer, die zumindest teilweise von einem transparenten Material umgeben ist, sodass nach dem Zünden einer Funkenstrecke Energie in Form von Strahlung durch das transparente Material hindurch gelangen kann.

Aus der DE 20 2015 100 397 U1 ist eine Funkenstrecke mit einer Kühleinrichtung bekannt, welche mehrere Funkenstreckenelektroden sowie zumindest eine Zündhilfselektrode umfasst.

Es verbleibt festzuhalten, dass der Aufwand zur Vermeidung von Netzfolgeströmen insbesondere bei energiearmen und kleinen Impulsströmen bei Funkenstrecken sehr hoch ist und neben einer begrenzten Impulsstromfestigkeit auch die Lebensdauer, den Schutzpegel und das Ausblasverhalten negativ beeinflusst.

Bei hohen Impulsströmen hingegen werden insbesondere bei gekapselten und getriggerten Funkenstrecken extrem hohe Anforderungen an alle Bauteile gestellt.

Bekannte Lösungen aus dem Stand der Technik sind daher auf Kompromisse zielend.

Aus dem Vorgenannten ist es Aufgabe der Erfindung, einen weiterentwickelten, gekapselten Überspannungsableiter auf Funkenstreckenbasis mit mindestens zwei teilweise gegenüberliegenden Hauptelektroden sowie mindestens einer Trigger- oder Zündhilfselektrode anzugeben, welche von vornherein folgestromfrei auslegbar ist.

Die zu schaffende Lösung soll die Folgestromfreiheit bei Betriebsspannung der Funkenstrecke unabhängig von der Höhe des Auslöseimpulses sicher gewährleisten und bei hohen Impulsbelastungen den auftretenden Verschleiß der Bauteile auf beherrschbare Werte begrenzen.

Die Lösung der Aufgabe der Erfindung erfolgt durch einen gekapselten Überspannungsableiter auf Funkenstreckenbasis gemäß der Merkmalskombination nach Anspruch 1 sowie einem Verfahren zur Dimensionierung eines Lichtbogenkanals für einen folgestromfreien, gekapselten Überspannungsableiter gemäß der Lehre nach Anspruch 14.

Die Unteransprüche umfassen hierbei mindestens zweckmäßige Ausgestaltungen und Weiterbildungen des Grundgedankens der Erfindung.

Erfindungsgemäß wird vorgeschlagen, die minimale spezifische Energie, welche zur Zündung der Hauptentladungsstrecke einer Funkenstrecke führt, so mit dem Aufbau und der Funktionsweise der Funkenstrecke abzustimmen, dass der Spannungsbedarf eines Lichtbogens oberhalb der Betriebsspannung bzw. der Netzspannung liegt.

Das folgestromfreie Verhalten der Funkenstrecke wird dadurch sichergestellt, dass die Zündung der Funkenstrecke zwischen den Hauptelektroden nur bei Impulsstrombelastungen ab einer entsprechenden Höhe bzw. Energie erfolgt derart, dass der Spannungsbedarf für einen Lichtbogen während und unmittelbar nach einer entsprechenden Impulsentladung im Hauptkanal der Funkenstrecke oberhalb der Netzspannung liegt.

Diesbezüglich wird die Methodik der Triggerung und der Aufbau des Lichtbogenbereiches der Funkenstrecke weitergebildet.

Die Triggerung ermöglicht hier eine Bewertung des Energieinhaltes bzw. der Höhe des Impulsstromes. Der Lichtbogenbereich der Funkenstrecke ist spaltartig und unter Nutzung von gasabgebenden Materialien gestaltet.

Die elektrische Feldstärke im Entladungskanal wird bei der Mindesthöhe des Impulses und der sich durch die Abstimmung hierbei ergebenden Mindeststromdichte auf ein Vielfaches, jedoch mindestens das Zehnfache einer freien Entladung erhöht.

Eine weitere Erhöhung der elektrischen Feldstärke erfolgt durch die Gasabgabe und dem damit verbundenen Druckaufbau infolge der mindestens zu erwartenden Impulsenergie. Dieser Druckaufbau bedingt mindestens eine weitere Verdoppelung der bereits vervielfachten elektrischen Feldstärke.

Bei dem gekapselten Überspannungsableiter auf Funkenstreckenbasis wird zunächst von zwei, mindestens teilweise gegenüberliegenden Hauptelektroden ausgegangen. Weiterhin ist mindestens eine Trigger- oder Zündhilfselektrode vorhanden und es liegt eine zwischen den Hauptelektroden vorhandene Lichtbogenbrennkammer vor.

Die Lichtbogenbrennkammer besteht aus einem Einsatzteil oder wird durch ein solches Einsatzteil gebildet, welches in seinem Inneren mindestens einen spaltartigen Lichtbogenkanal aufweist.

Die Spaltlänge beträgt ein Vielfaches der Spalthöhe oder des Spaltdurchmessers, wobei das Einsatzteil mindestens teilweise aus dem bereits erwähnten gasabgebenden Material besteht, derart, dass eine Gasabgabe in den Lichtbogenkanal hinein erfolgt bzw. möglich wird.

In einer bevorzugten Weiterbildung der Erfindung weist der spaltartige Lichtbogenkanal Umlenkungen auf, besitzt eine Spiralform oder ist als Mäander im Einsatzteil verlaufend realisiert.

Zwischen dem Einsatzteil und der zur Lichtbogenbrennkammer weisenden Oberflächenseite der Hauptelektroden verbleibt erfindungsgemäß ein Abstandsraum, wobei der mindestens eine spaltartige Lichtbogenkanal im jeweiligen Abstandsraum beginnt und/oder endet.

Das Einsatzteil kann überwiegend aus dem gasabgebenden Material bestehen, wobei bevorzugt der Anteil des hartgasabgebenden Materials bei mindestens 50 % liegt.

Das Einsatzteil kann darüber hinaus eine Sandwichstruktur besitzen, bei welcher sich abbrandfeste und hartgasabgebende Abschnitte abwechseln.

In einer Alternative kann das Einsatzteil aus einem porösen, abbrandfesten Material bestehen.

In den durch die Porosität gebildeten Hohlräumen kann dann ein hartgasabgebendes Material eingebracht werden.

Wenigstens eine der Hauptelektroden weist einen Rücksprung nach Art einer Hohlelektrode auf. In diesem Rücksprungs- oder Hohlelektrodenraum kann dann der spaltartige Lichtbogen beginnen oder enden.

Weiterhin besitzt die Lichtbogenbrennkammer Entlüftungen zum Druckausgleich. Weitere Entlüftungen können im Bereich mindestens einer Hauptelektrode vorhanden sein. In bekannter Weise können die Entlüftungskanäle als Kanäle kleinen Querschnittes unter Nutzung üblicher Befestigungsgewinde realisiert werden. Im Bereich der Umlenkungen ist der spaltartige Lichtbogenkanal bevorzugt aus einem abbrandfesten Material, zum Beispiel einem Keramikmaterial, gebildet.

Die Trigger- oder Zündelektrode liegt in unmittelbarer Nähe einer der Hauptelektroden und reicht in die Lichtbogenbrennkammer hinein.

Bei einer alternativen Ausführungsform ist die Trigger- oder Zündelektrode in einen separaten Raum geführt, welcher mit der Lichtbogenbrennkammer über einen Kanal verbunden ist, wobei ein Abschnitt der diesbezüglich räumlich nächstliegenden Hauptelektrode den separaten Raum begrenzt und der separate Raum mit einer weiteren Entlüftung in Verbindung steht.

Bei dem erfindungsgemäßen Verfahren zur Dimensionierung eines Lichtbogenkanals für einen folgestromfreien gekapselten Überspannungsableiter erfolgt eine Einstellung der elektrischen Feldstärke des störungsbedingten Lichtbogens auf mindestens 60 V/mm, wobei die Höhe oder der Durchmesser des Lichtbogenkanals im Bereich zwischen 0,1 bis 1 mm liegt und die Länge oder Breite des Spalts mindestens das Zehnfache beträgt.

Die Triggereinrichtung ist so ausgelegt, dass eine Zündung der Funkenstrecke zwischen den Hauptelektroden nur bei Impulsstrombelastungen vorgegebener Höhe eintritt, welche sicherstellt, dass der Lichtbogenspannungsbedarf oberhalb der jeweiligen Netzspannung liegt.

Die Erfindung soll nachstehend anhand eines Ausführungsbeispieles sowie unter Zuhilfenahme von Figuren näher erläutert werden.

Hierbei zeigen:
Fig. 1 eine erste Ausführungsform eines erfindungsgemäßen Überspannungsableiters auf Funkenstreckenbasis im Längsschnitt mit sandwichartigem Aufbau des Einsatzteiles; und
Fig. 2 eine Darstellung ähnlich derjenigen nach Fig. 1, jedoch mit einem Einsatzteil aus einem porösen Material sowie einer Trigger- oder Zündelektrode, die in einen separaten Raum geführt ist, welcher mit der eigentlichen Lichtbogenbrennkammer über einen Kanal in Verbindung steht.

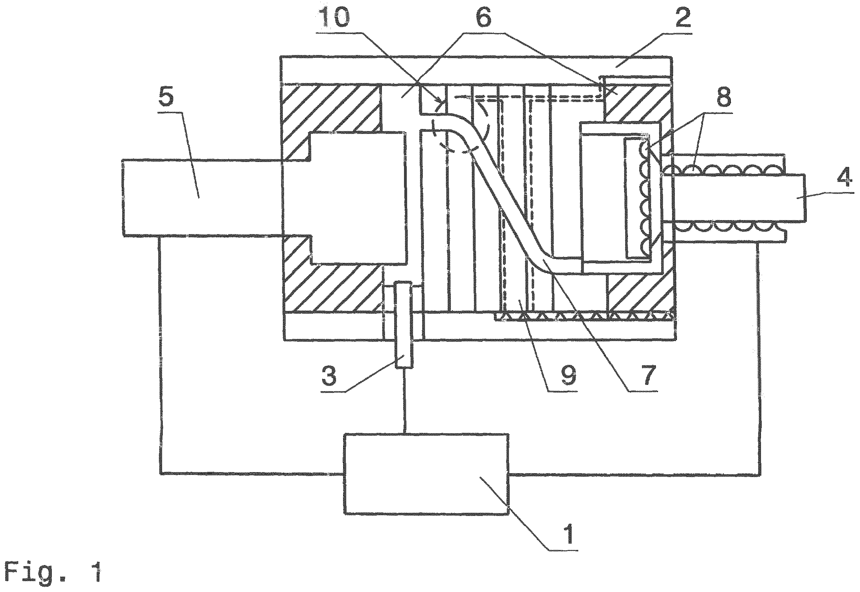

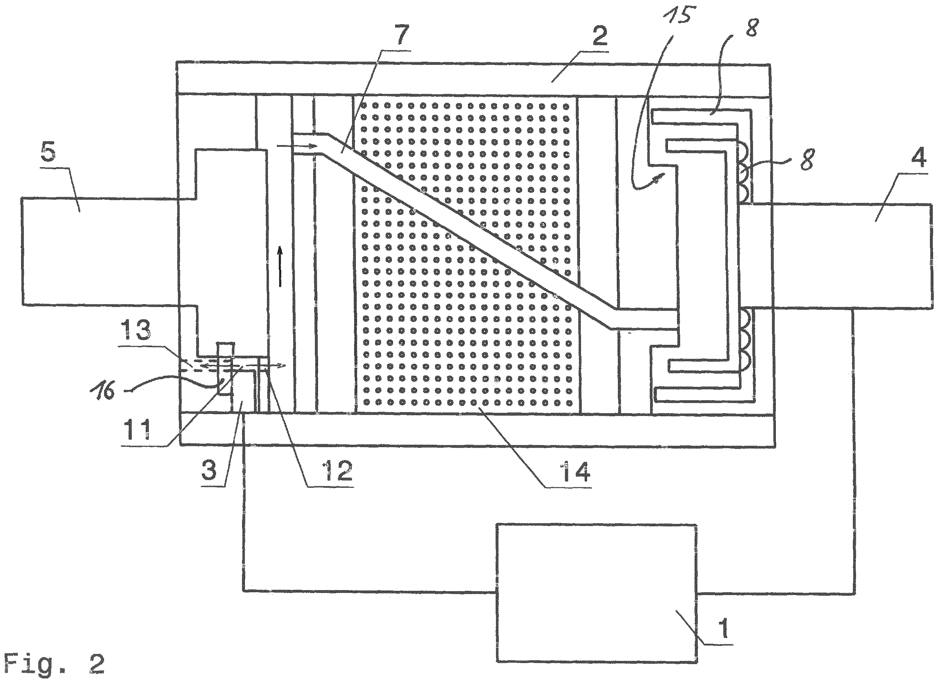

Die in den Figuren 1 und 2 gezeigten Prinzipdarstellungen (Längsschnitte) gehen von dem Gedanken aus, die minimale spezifische Energie, welche zur Zündung der Hauptentladungsstrecke einer Funkenstrecke führt, so mit dem Aufbau und der Funktionsweise der Funkenstrecke abzustimmen, dass der Spannungsbedarf des Lichtbogens oberhalb der Betriebs- oder Netzspannung liegt, so dass Folgestromfreiheit vorliegt.

Der Spannungsbedarf des Lichtbogens ergibt sich vereinfacht aus der Summe von Elektrodenfallspannung und dem Produkt der elektrischen Feldstärke des Lichtbogens und dessen Länge.

Die Elektrodenfallspannung ist in gewissen Grenzen von der Stromstärke und dem eingesetzten Elektrodenmaterial abhängig. Die Höhe schwankt bei einer einfachen Funkenstrecke und den üblichen Materialien zwischen 11 und 20 V und ist daher bei Anwendungen, beispielsweise in einem Wechselspannungsnetz von 230/400 V nahezu bedeutungslos.

Die elektrische Feldstärke eines freibrennenden Lichtbogens liegt etwa zwischen 0,8 bis 3 V/mm. Die Länge des Lichtbogens geht im genannten Summanden linear ein.

Da bei Reiheneinbaugeräten die Abmessungen begrenzt sind und sehr große Abstände zwischen den Hauptelektroden auch einen hohen Aufwand zur Ionisierung und somit zur Einhaltung des Schutzpegels erfordern, ist die Lichtbogenlänge bei Funkenstrecken üblicherweise auf wenige 10 mm begrenzt.

Bei diesen Längen ergeben sich ohne weitere Maßnahmen nur Lichtbogenspannungen von unter 100 Volt. Bei einem hinreichenden Energieeintrag in der Funkenstrecke und dem Einsatz von Hartgas in der Lichtbogenkammer kann ein dynamischer Druckaufbau sehr schnell zu einer Vervielfachung der elektrischen Feldstärke des Lichtbogens führen.

Der Energieeintrag erfolgt bei Lösungen entsprechend dem Stand der Technik sowohl durch den Impulsstrom als auch durch den Netzfolgestrom. Bei kleinen Impulsströmen steigt der Anteil des Folgestromes zur Drucksteigerung und bei relativ hohen Impulsströmen bzw. energiereichen Impulsströmen sinkt der Anteil des notwendigen Folgestromes. Vorstehendes geht einher mit einer drastischen Reduzierung des Folgestromes.

Die Höhe bzw. die Energie des Impulsstromes, welcher die Hauptfunkenstrecke zündet, ist jedoch nicht definiert. Der Aufbau des Druckes erfordert zudem eine nicht vernachlässigbare Abgabe von Hartgas und somit eine Alterung der Funkenstrecke.

Eine Einengung des Lichtbogens in Hohlräume, wie beispielsweise in der gattungsbildenden DE 101 64 025 A1 vorgeschlagen, führt insbesondere bei kleinen Strömen nicht zwingend zu einer starken Erhöhung der elektrischen Feldstärke und somit der Lichtbogenspannung. Bei sogenannten wandstabilisierten Lichtbögen ist die Wirksamkeit der Erhöhung der elektrischen Feldstärke von der Stromdichte abhängig. Bei energiearmen bzw. stromschwachen Impulsen würden sich Kanäle von wenigen 10 µm ergeben. Die mechanischen und thermischen Belastungen in einem einzelnen Kanal bei einer einfachen und kostengünstigen Gestaltung einer Funkenstrecke sind bei den maximal zu beherrschenden Impulsen unter diesen Umständen viel zu hoch.

Das angestrebte folgestromfreie Verhalten der Funkenstrecke unabhängig von der Höhe und Energie der Störgröße wird dadurch sichergestellt, dass die Zündung der erfindungsgemäßen Funkenstrecke zwischen den Hauptelektroden nur bei Impulsstrombelastungen ab einer entsprechenden Höhe oder Energie erfolgt, welche sicherstellt, dass der Spannungsbedarf für einen Lichtbogen oberhalb der Netzspannung liegt.

Zur Umsetzung dieses Grundgedankens erfolgt eine Abstimmung der Triggerung und des Aufbaus des Lichtbogenbereiches der Funkenstrecke. Die Triggerung ermöglicht eine Bewertung des Energieinhaltes bzw. der Höhe des Impulsstromes.

Der Lichtbogenbereich der erfindungsgemäßen Funkenstrecke ist spaltartig mit gasabgebenden Materialien, vorzugsweise POM gestaltet.

Die elektrische Feldstärke im Entladungskanal wird bei der Mindesthöhe des Impulses und der sich durch die Abstimmung hierbei ergebenden Mindeststromdichte auf ein Vielfaches, jedoch mindestens das 10-fache einer freien Entladung erhöht.

Eine weitere Erhöhung der elektrischen Feldstärke wird durch die Gasabgabe und den damit verbundenen Druckaufbau infolge der mindestens zu erwartenden Impulsenergie erreicht. Dieser Druckaufbau infolge der Störgröße bedingt mindestens eine weitere Verdoppelung der bereits vervielfachten elektrischen Feldstärke des Lichtbogens.

Durch die vorstehenden Maßnahmen wird gesichert, dass die elektrische Feldstärke des Lichtbogens von mindestens 60 V/mm erreicht ist. Diese Höhe ist bei einer Nennspannung von 230 V Wechselspannung und einer Lichtbogenlänge von 5 mm für ein folgestromfreies Verhalten ausreichend. Für höhere Spannungen oder TOV-Belastungen, bei denen ebenso ein folgestromfreies Verhalten gewünscht wird, kann eine weitere Erhöhung der elektrischen Feldstärke bzw. der Lichtbogenlänge realisiert werden.

Der erfindungsgemäße Lichtbogenbereich wird überwiegend bevorzugt spaltartig ausgeführt, wobei die Höhe des Spaltes bevorzugt kleiner 1 mm, jedoch > 0,1 mm beträgt. Die Breite oder Länge des Spaltes beträgt ein Mehrfaches seiner Höhe, bevorzugt mindestens das Zehnfache.

Der Spaltbereich ist mindestens von 50 % hartgasabgebenden Stoffen umgeben.

Der Spalt kann partiell oder teilweise auch von abbrandfesten Stoffen, beispielsweise Keramiken gebildet werden. Ebenso ist eine Infiltration von Keramiken mit offener Porosität durch gasabgebende Stoffe möglich.

Die vorgeschlagene Anordnung ermöglicht die Änderung der Geometrie des Kanals durch das Nachführen des Hartgases zu begrenzen. Das Nachführen kann passiv durch die Oberflächenerwärmung erfolgen, jedoch kann beispielsweise aktiv auf die Wärme- bzw. Strahlungsleitung des Materials zu einer Nachführung des Hartgases aus tieferen Bereichen des porösen Stoffes bzw. der Sandwichstruktur zurückgegriffen werden.

Der erläuterte Aufbau ermöglicht es, bei relativ konstanter Kanalgeometrie den Anteil der gasabgebenden Materialien und somit den Druckaufbau bei hohen Belastungen zu begrenzen, da ein Teil der Energie, welche im Wesentlichen als Strahlungsenergie abgegeben wird, nicht direkt für eine zusätzliche Hartgaserzeugung wirksam wird.

Der spaltartige Lichtbogenkanal kann neben einem geradlinigen Verlauf auch Umlenkungen beinhalten, welche insbesondere bei kleinen Strömen und bei Alterung eine intensive Kühlung im Bereich der Umlenkung auch ohne vollständige Ausfüllung des Kanals mit Plasma erzwingen.

Der Spalt ermöglicht eine intensive Kühlung relativ stromschwacher Lichtbögen selbst bei noch nahezu kreisförmigen leitfähigen Querschnitten des Lichtbogens und erlaubt eine weitere Ausdehnung des Lichtbogenquerschnittes mit ellipsoider Gestalt, wodurch die Belastung der Funkenstrecke bei hohen Strömen begrenzt bleibt.

Die Bewertung der Energie der Störgröße durch die Triggerschaltung erfolgt gemäß dem eingangs geschilderten bekannten Stand der Technik. Es können sowohl Triggerschaltungen auf der Basis eines Übertragers zur Erzeugung eines Zündimpulses als auch Funkenstrecken mit permanenter Ionisation einer Hilfsfunkenstrecke eingesetzt werden, bei welchen erst die definierte Zeitdauer und Stromhöhe der Störgröße die hinreichende Ionisation und Zündung des Hauptlichtbogens zwischen den Hauptelektroden ermöglicht.

Als Mindeststrom zur Zündung der Hauptentladungsstrecke wird bevorzugt ein Strom > 1 kA der Impulsform 8/20 µs gewählt. Aufgrund der kurzen Einwirkzeit wird die Gasabgabe gegenüber Impulsen der Wellenform 10/350 µs mit gleicher Amplitude begrenzt.

Impulse dieser Impulsform, welche zur Zündung der Funkenstrecke führen, können daher bei gleichem Energieinhalt bezüglich der Amplitude kleiner sein.

Bei der genannten Impulshöhe und der erläuterten Kanalgeometrie des Lichtbogenkanals im Lichtbogenbrennraum kann die gewünschte Folgestromfreiheit erzielt werden. Bei größerer Kanalgeometrie erfolgt die Zündung erst bei Impulsen mit höheren Energieinhalten.

Gemäß der Längsschnittdarstellung einer prinzipiellen Ausbildung eines Überspannungsableiters auf Funkenstreckenbasis wird von einer Triggerschaltung 1 und einer Funkenstrecke 2 ausgegangen.

Die Triggerschaltung 1 besitzt hierbei einen von der eigentlichen Funkenstrecke 2 unabhängigen Ableitpfad, beispielsweise einen Varistor umfassend.

Die Zündung der Funkenstrecke 2 erfolgt durch einen in der Triggerschaltung 1 vorhandenen Übertrager, welcher eine überhöhte Zündspannung an der Trigger- oder Hilfselektrode 3 der Funkenstrecke 2 bereitstellt.

Diese Zündspannung der Trigger- oder Hilfselektrode 3 wird erst ab einem festgelegten Mindestwert der Energie und/oder der Höhe der abzuleitenden Störgröße zur Verfügung gestellt.

In der Funkenstrecke 2 erfolgt somit keine Ionisation bei energiearmen Belastungen. Bei energiereichen Belastungen erfolgt die Ionisation erst zeitlich verzögert gegenüber dem Beginn der Ableitung der Störgröße unter Nutzung der Triggerschaltung 1.

Die Funkenstrecke 2 weist zwei im Wesentlichen gegenüberliegende Hauptelektroden 4; 5 und die bereits erwähnte Trigger- und Hilfselektrode 3 auf, wobei die Trigger- oder Hilfselektrode 3 eine unterschiedliche Distanz zu den Hauptelektroden besitzt. Im gezeigten Beispiel ist die Trigger- oder Hilfselektrode 3 räumlich dicht an der Hauptelektrode 5 befindlich derart, dass nach dem Zünden der Hilfsfunkenstrecke ein Stromfluss über die Hilfsfunkenstrecke und die Bauteile der Triggerschaltung erfolgen kann.

Die Lichtbogenkammer 6 besteht aus einem Einsatzteil, beispielsweise in Sandwichform, umfassend mehrere Scheiben oder Abschnitte.

Das Einsatzteil bzw. die Lichtbogenkammer grenzt nicht unmittelbar an die Elektroden an, so dass im Bereich der Oberfläche der Hauptelektroden 4; 5 der für den Lichtbogen zur Verfügung stehende Querschnitt relativ groß ist, wodurch die Stromdichte in den Elektroden reduzierbar ist und der Leistungsumsatz im Elektrodenbereich begrenzt bleibt.

An diesem vorgelagerten Bereich schließt sich der erfindungsgemäße spaltartige Lichtbogenkanal 7 an.

Das Wandmaterial für den Lichtbogenkanal 7 besteht oder beinhaltet hartgasabgebende Stoffe.

Die Kanalgeometrie zwischen den Elektroden 4; 5 besitzt bei der Darstellung nach Fig. 1 zwei Umlenkungen 10. Der Lichtbogenkanal kann auch über weitere Umlenkungen verfügen, einen spiralförmigen oder einen mäanderförmigen Verlauf besitzen.

Gemäß Fig. 1 wird beispielsweise eine einfache spiralförmige Kanalgeometrie mit einer Umdrehung gezeigt.

Der Lichtbogenkanal 7 weist beispielsweise eine Geometrie von ≤ 1 mm Höhe und eine Breite oder Länge von < 10 mm auf.

Zumindest im Bereich der Hauptelektrode 4 besteht die Möglichkeit der Abströmung von heißen Gasen in zumindest einen Kanal 8 mit kleinem Querschnitt und hoher Wärmekapazität und Wärmeableitung.

Neben diesem Kanal 8 können auch im Bereich der Lichtbogenbrennkammer weitere Entlüftungen 9 vorgesehen sein. Diese können diskret aber auch aus porösen Materialien gefertigt werden.

Insbesondere im Bereich der Umlenkungen 10 ist ein abbrandfestes Material bevorzugt. Ergänzend können in diesen Abschnitten Wärmesenken vorgesehen sein.

Der Sandwichaufbau des Einsatzteiles gemäß Fig. 1 weist eine Stapelanordnung auf, die eine Stapelung senkrecht zur Längsachse umfasst. Alternativ ist auch eine Stapelung bestehend aus Einzelscheiben oder Einzelschichten parallel zur Längsachse des Überspannungsableiters denkbar.

Gemäß der Prinzipdarstellung im Längsschnitt nach Fig. 2 wird von einem gekapselten Überspannungsableiter auf Funkenstreckenbasis ausgegangen, bei welchem die Triggerung 1 über keinen separaten Ableitpfad verfügt. Vielmehr wird bei dieser Ausführungsform der Impulsstrom beim Ansprechen der Triggerschaltung direkt zwischen der Trigger- und Hilfselektrode 3 und der Hauptelektrode 5 zum Fließen gebracht.

Damit die Hauptfunkenstrecke zwischen den Hauptelektroden 4; 5 nicht auch bei kleinen energiearmen Strömen zündet, wird entweder die Distanz zwischen den Hauptelektroden erhöht bzw. der Hilfslichtbogen teilweise verdeckt gegenüber zumindest einer der Hauptelektroden, im gezeigten Beispiel der Hauptelektrode 5, zum Stehen gebracht.

Gemäß der Darstellung nach Fig. 2 entsteht der Hilfslichtbogen in einem separaten Raum 11, welcher mit der Lichtbogenbrennkammer zwischen den Hauptelektroden lediglich durch den gezeigten Kanal 12 verbunden ist.

Über die Abmessungen, insbesondere den Querschnitt des Kanals 12, ist steuerbar, ab welchem Strom bzw. welcher Energie eine hinreichende Ionisierung zwischen den Hauptfunkenstrecken erfolgt.

Ein weiteres Kriterium zur Steuerung kann diesbezüglich auch der Abstand und der Querschnitt zwischen dem Kanal 12 zum Einlaufbereich des Lichtbogenkanals 7 genutzt werden. Durch die in der Fig. 2 gezeigte zusätzliche Entlüftung 13 des Raumes 11 mit Hilfslichtbogen, ist zudem eine Beeinflussung desjenigen Anteiles von ionisiertem Gas möglich, welches in den Lichtbogenkanal 7 gelangt.

Zusätzlich kann eine geometrische Unterteilung des Raumes 11 mit Hilfslichtbogen eingesetzt werden, um eine Aufteilung der ionisierten Gase in die Kanäle 12 zur Triggerung bzw. 13 zur ungenutzten Abführung zu unterstützen.

Wie bereits erläutert, wird gemäß der Fig. 1 der Lichtbogenkanal sandwichartig aus abbrandfesten Stoffen und hartgasabgebenden Materialien gestaltet.

Gemäß Fig. 2 besteht der Kanal respektive das Einsatzteil aus einem abbrandfesten Werkstoff 14 mit offener Porosität. Die Poren nehmen hierbei mindestens partiell einen hartgasabgebenden Stoff, zum Beispiel POM, auf.

Fig. 2 geht von einem spaltartigen Lichtbogenkanal 7 mit einer Dicke bzw. einer Höhe von 1 mm aus. Der beispielhaft spiralförmig gestaltete Kanal besitzt eine Länge von bis zu 10 mm.

Der Kanal 7 endet im Bereich der Elektrode 4 in einem Rücksprung 15, der Bestandteil einer Hohlelektrode sein kann.

Weiterhin sind auch bei dieser Ausführungsform Entlüftungs- oder Abströmkanäle 8 vorhanden. Über die Länge und die Anzahl der Entlüftungskanäle ist eine gute Kühlung der entstehenden Gase möglich. Insbesondere bei einem metallischen Gehäuse kann die Kanalführung in das Gehäuse zum Zweck der besseren Abkühlung in das Gehäuse integriert werden.

Wie in Fig. 2 gezeigt, besteht die Möglichkeit, ein elektrisch leitendes bzw. halbleitendes Material 16 zwischen der Triggerelektrode 3 und der Hauptelektrode 5 anzuordnen, um eine Funkenbildung erst bei höheren Strömen zu bewirken. Kleine, energiearme Ströme führen dann nicht zu einer Aktivierung der Funkenstrecke.

Das Element 16 kann teilweise in die Elektrode 5 hineinreichen oder in diese eingesetzt sein.

Beim Ansprechen der Triggerung 1 wird durch das Element 16 ein Stromfluss zwischen der Triggerelektrode 3 und der Hauptelektrode 5 ermöglicht. Erst bei höheren Strömen kommt es dann zu einer Gleitentladung und letztendlich zur Funkenbildung über das Element 16. Hierdurch entstehen freie Ladungsträger im Raum 11, welche durch die Öffnung 12 bis zum Kanal 7 gelangen und der Zündung der Hauptentladungsstrecke dienen. Die Öffnung bzw. der Kanal 12 kann durch das Element 16 aber auch neben diesem Element geführt und entsprechend konstruktiv ausgelegt werden.

## Patentansprüche

1. Gekapselter Überspannungsableiter auf Funkenstreckenbasis (2) mit einer Funkenstrecke (2) und einer Triggerschaltung (1),
wobei der Überspannungsableiter zwei, mindestens teilweise gegenüberliegenden Hauptelektroden (4; 5) sowie mindestens eine Trigger- oder Zündhilfselektrode (3) und eine zwischen den Hauptelektroden (4; 5) vorhandene Lichtbogenbrennkammer (6) aufweist,
wobei die Lichtbogenbrennkammer (6) aus einem Einsatzteil (14) besteht oder ein Einsatzteil (14) aufweist, welches in seinem Inneren einen spaltartigen Lichtbogenkanal (7) besitzt,
wobei dessen Spaltlänge ein Vielfaches der Spalthöhe oder des Spaltdurchmessers beträgt, und das Einsatzteil (14) mindestens teilweise aus einem gasabgebenden Material besteht, derart, dass eine Gasabgabe in den Lichtbogenkanal (7) erfolgt, wobei zwischen dem Einsatzteil (14) und der zur Lichtbogenbrennkammer (6) weisenden Oberflächenseite der Hauptelektroden (4; 5) ein Abstandsraum verbleibt, wobei der spaltartige Lichtbogenkanal (7) im Abstandsraum beginnt und/oder endet, **dadurch gekennzeichnet, dass**
die Höhe oder der Durchmesser des spaltartigen Lichtbogenkanals (7) im Bereich zwischen 0,1 bis 1 mm liegt und die Länge oder Breite des Spalts mindestens das 10-fache beträgt, sodass die elektrische Feldstärke eines störungsbedingten Lichtbogens im spaltartigen Lichtbogenkanal (7) mindestens 60 V/mm beträgt, und
wobei die Triggereinrichtung so ausgeführt ist, dass eine Zündung der Funkenstrecke (2) zwischen den Hauptelektroden (4; 5) nur bei Impulsstrombelastungen vorgegebener Höhe eintritt, welche sicherstellt, dass der Lichtbogenspannungsbedarf oberhalb der jeweiligen Netzspannung liegt.

2. Überspannungsableiter nach Anspruch 1, **dadurch gekennzeichnet, dass** der spaltartige Lichtbogenkanal (7) Umlenkungen (10) aufweist und/oder spiralförmig oder als Mäander im Einsatzteil verläuft.

3. Überspannungsableiter nach einem der vorangegangenen Ansprüche, **dadurch gekennzeichnet, dass** das Einsatzteil überwiegend aus hartgasabgebendem Material besteht.

4. Überspannungsableiter nach Anspruch 3, **dadurch gekennzeichnet, dass** der hartgasabgebende Materialanteil bei mindestens 50 % liegt.

5. Überspannungsableiter nach Anspruch 3 oder 4, **dadurch gekennzeichnet, dass** das Einsatzteil (14) eine Sandwichstruktur aufweist, bei welcher sich abbrandfeste und hartgasabgebende Materialien abwechseln.

6. Überspannungsableiter nach einem der vorangegangenen Ansprüche, **dadurch gekennzeichnet, dass** das Einsatzteil (14) aus einem porösen, abbrandfesten Material besteht.

7. Überspannungsableiter nach Anspruch 6, **dadurch gekennzeichnet, dass** in den durch die Porosität gebildeten Hohlräumen hartgasabgebende Materialien eingebracht sind.

8. Überspannungsableiter nach einem der vorangegangenen Ansprüche, **dadurch gekennzeichnet, dass** mindestens eine der Hauptelektroden (4; 5) einen Rücksprung (15) nach Art einer Hohlelektrode aufweist, in dem der spaltartige Lichtbogenkanal (7) beginnt oder endet.

9. Überspannungsableiter nach einem der vorangegangenen Ansprüche, **dadurch gekennzeichnet, dass** im Bereich der Lichtbogenbrennkammer Entlüftungen (9) zum Druckausgleich ausgebildet sind.

10. Überspannungsableiter nach einem der vorangegangenen Ansprüche, **dadurch gekennzeichnet, dass** im Bereich einer der Hauptelektroden (4) Entlüftungen (8) zum Druckausgleich ausgebildet sind.

11. Überspannungsableiter nach einem der Ansprüche 1 bis 10, **dadurch gekennzeichnet, dass** im Bereich der Umlenkungen (10) der spaltartige Lichtbogenkanal (7) aus abbrandfesten Materialien gebildet oder von derartigen abbrandfesten Materialien begrenzt ist.

12. Überspannungsableiter nach einem der vorangegangenen Ansprüche, **dadurch gekennzeichnet, dass** die Trigger- oder Zündelektrode (3) in unmittelbarer Nähe einer der Hauptelektroden (5) in die Lichtbogenbrennkammer (6) hineinreicht.

13. Überspannungsableiter nach einem der Ansprüche 1 bis 11, **dadurch gekennzeichnet, dass** die Trigger- oder Zündelektrode (3) in einen separaten Raum (11) geführt ist, welcher mit der Lichtbogenbrennkammer über einen Kanal (12) verbunden ist, wobei ein Abschnitt der Hauptelektrode (5) den separaten Raum (11) begrenzt und der separate Raum (11) mit einer Entlüftung (13) in Verbindung steht.

14. Verfahren zur Dimensionierung eines Lichtbogenkanals (7) für einen folgestromfreien gekapselten Überspannungsableiter nach einem oder mehreren der Ansprüche 1 bis 13, **dadurch gekennzeichnet, dass**
eine Einstellung der elektrischen Feldstärke des störungsbedingten Lichtbogens auf mindestens 60 V/mm erfolgt,
wobei die Höhe oder der Durchmesser des Lichtbogenkanals (7) im Bereich zwischen 0,1 bis 1 mm liegt und die Länge oder Breite des Spalts mindestens das 10-fache beträgt und
die Triggereinrichtung so ausgeführt wird, dass eine Zündung der Funkenstrecke (2) zwischen den Hauptelektroden (4; 5) nur bei Impulsstrombelastungen vorgegebener Höhe eintritt, welche sicherstellt, dass der Lichtbogenspannungsbedarf oberhalb der jeweiligen Netzspannung liegt.

## Claims

1. An encapsulated spark gap-based surge arrester (2) having a spark gap (2) and a trigger circuit (1),
wherein the surge arrester includes two at least partly opposite main electrodes (4; 5) and at least one trigger or auxiliary starting electrode (3) and an arc combustion chamber (6) provided between the main electrodes (4; 5),
wherein the arc combustion chamber (6) consists of an insert part (14) or includes an insert part (14) which has in its interior a gap-like arc channel (7),
wherein the gap length thereof is a multiple of the gap height or the gap diameter, and the insert part (14) consists at least partially of a gas-emitting material such that gas is emitted into the arc channel (7), wherein a distance space remains between the insert part (14) and the surface side of the main electrodes (4; 5) facing the arc combustion chamber (6), wherein the gap-like arc channel (7) begins and/or ends in the distance space, **characterized in that**
the height or the diameter of the gap-like arc channel (7) is in the range between 0.1 and 1 mm and the length or width of the gap is at least 10 times as large, so that the electric field strength of a fault-induced arc in the gap-like arc channel (7) is at least 60 V/mm, and
wherein the trigger device is configured such that an ignition of the spark gap (2) between the main electrodes (4; 5) only occurs at pulsed current loads of a specified level which ensures that the arc voltage requirement is above the respective mains voltage.

2. The surge arrester according to claim 1, **characterized in that** the gap-like arc channel (7) has deflections (10) and/or extends in a spiral shape or as a meander in the insert part.

3. The surge arrester according to either of the preceding claims, **characterized in that** the insert part consists predominantly of a hard gas releasing material.

4. The surge arrester according to claim 3, **characterized in that** the proportion of the hard gas releasing material is at least 50%.

5. The surge arrester according to claim 3 or 4, **characterized in that** the insert part (14) has a sandwich structure in which arc erosion resistant and hard gas releasing materials alternate.

6. The surge arrester according to any of the preceding claims, **characterized in that** the insert part (14) consists of a porous, arc erosion resistant material.

7. The surge arrester according to claim 6, **characterized in that** hard gas releasing materials are incorporated in the cavities formed by the porosity.

8. The surge arrester according to any of the preceding claims, **characterized in that** at least one of the main electrodes (4; 5) has a recess (15) in the nature of a hollow electrode, in which the gap-like arc channel (7) begins or ends.

9. The surge arrester according to any of the preceding claims, **characterized in that** vents (9) for pressure compensation are formed in the area of the arc combustion chamber.

10. The surge arrester according to any of the preceding claims, **characterized in that** vents (8) for pressure compensation are formed in the area of one of the main electrodes (4).

11. The surge arrester according to any of claims 1 to 10, **characterized in that** in the area of the deflections (10), the gap-like arc channel (7) is formed from arc erosion resistant materials or is bounded by such arc erosion resistant materials.

12. The surge arrester according to any of the preceding claims, **characterized in that** the trigger or starting electrode (3) extends into the arc combustion chamber (6) in the immediate vicinity of one of the main electrodes (5).

13. The surge arrester according to any of claims 1 to 11, **characterized in that** the trigger or starting electrode (3) is guided into a separate space (11) which communicates with the arc combustion chamber via a channel (12), wherein a portion of the main electrode (5) defines the separate space (11) and the separate space (11) is in communication with a vent (13).

14. A method of dimensioning an arc channel (7) for a follow current-free encapsulated surge arrester according to one or more of claims 1 to 13, **characterized in that**
an adjustment of the electric field strength of the fault-induced arc to at least 60 V/mm is performed,
wherein the height or the diameter of the arc channel (7) is in the range between 0.1 and 1 mm and the length or width of the gap is at least 10 times as large, and
the trigger device is configured such that an ignition of the spark gap (2) between the main electrodes (4; 5) only occurs at pulsed current loads of a specified level which ensures that the arc voltage requirement is above the respective mains voltage.

## Revendications

1. Parasurtenseur encapsulé basé sur un éclateur (2), comprenant un éclateur (2) et un circuit de déclenchement (1),
le parasurtenseur comprenant deux électrodes principales (4 ; 5) au moins partiellement opposées et au moins une électrode de déclenchement ou d'aide à l'allumage (3) ainsi qu'une chambre de combustion d'arc électrique (6) présente entre les électrodes principales (4 ; 5),
la chambre de combustion d'arc électrique (6) étant composée d'une pièce d'insertion (14) ou présentant une pièce d'insertion (14) qui présente à l'intérieur un canal d'arc électrique (7) en forme de fente,
la longueur de fente de celui-ci étant un multiple de la hauteur de fente ou du diamètre de fente, et la pièce d'insertion (14) étant composée au moins partiellement d'un matériau dégageant du gaz, de telle sorte qu'un dégagement de gaz a lieu dans le canal d'arc électrique (7), un espace d'écartement restant entre la pièce d'insertion (14) et le côté de la surface des électrodes principales (4 ; 5) orienté vers la chambre de combustion d'arc électrique (6), le canal d'arc électrique (7) en forme de fente commençant et/ou se terminant dans l'espace d'écartement, **caractérisé en ce que**
la hauteur ou le diamètre du canal d'arc électrique (7) en forme de fente se situe dans la plage comprise entre 0,1 et 1 mm et la longueur ou la largeur de la fente est au moins 10 fois supérieure, de sorte que l'intensité de champ électrique d'un arc électrique dû à une perturbation dans le canal d'arc électrique (7) en forme de fente est d'au moins 60 V/mm, et
le moyen de déclenchement étant réalisé de telle sorte qu'un allumage de l'éclateur (2) entre les électrodes principales (4 ; 5) ne se produit que pour des charges de courant pulsé d'un niveau prédéfini qui garantit que le besoin en tension d'arc électrique est supérieur à la tension de réseau respective.

2. Parasurtenseur selon la revendication 1, **caractérisé en ce que** le canal d'arc électrique (7) en forme de fente présente des déviations (10) et/ou s'étend en spirale ou en méandres dans la pièce d'insertion.

3. Parasurtenseur selon l'une des revendications précédentes, **caractérisé en ce que** la pièce d'insertion est principalement composée d'un matériau dégageant du gaz dur.

4. Parasurtenseur selon la revendication 3, **caractérisé en ce que** la part de matériau dégageant du gaz dur est d'au moins 50%.

5. Parasurtenseur selon la revendication 3 ou 4, **caractérisé en ce que** la pièce d'insertion (14) présente une structure en sandwich dans laquelle alternent des matériaux résistants à la brûlure et des matériaux dégageant du gaz dur.

6. Parasurtenseur selon l'une des revendications précédentes, **caractérisé en ce que** la pièce d'insertion (14) est composée d'un matériau poreux résistant à la brûlure.

7. Parasurtenseur selon la revendication 6, **caractérisé en ce que** des matériaux dégageant du gaz dur sont introduits dans les cavités formées par la porosité.

8. Parasurtenseur selon l'une des revendications précédentes, **caractérisé en ce qu'**au moins l'une des électrodes principales (4 ; 5) présente un renfoncement (15) à la manière d'une électrode creuse, dans lequel commence ou se termine le canal d'arc électrique (7) en forme de fente.

9. Parasurtenseur selon l'une des revendications précédentes, **caractérisé en ce que** des évents (9) sont réalisés dans la zone de la chambre de combustion d'arc électrique pour une égalisation de pression.

10. Parasurtenseur selon l'une des revendications précédentes, **caractérisé en ce que** des évents (8) sont réalisés dans la zone de l'une des électrodes principales (4) pour une égalisation de pression.

11. Parasurtenseur selon l'une des revendications 1 à 10, **caractérisé en ce que** dans la zone des déviations (10), le canal d'arc électrique (7) en forme de fente est composé de matériaux résistants à la brûlure ou est limité par de tels matériaux résistants à la brûlure.

12. Parasurtenseur selon l'une des revendications précédentes, **caractérisé en ce que** l'électrode de déclenchement ou d'allumage (3) pénètre dans la chambre de combustion d'arc électrique (6) à proximité immédiate de l'une des électrodes principales (5).

13. Parasurtenseur selon l'une des revendications 1 à 11, **caractérisé en ce que** l'électrode de déclenchement ou d'allumage (3) est guidée dans un espace séparé (11) qui est relié à la chambre de combustion d'arc électrique par un canal (12), une partie de l'électrode principale (5) délimitant l'espace séparé (11), et l'espace séparé (11) étant en communication avec un évent (13).

14. Procédé de dimensionnement d'un canal d'arc électrique (7) pour un parasurtenseur encapsulé sans courant de suite selon l'une ou plusieurs des revendications 1 à 13, **caractérisé en ce que**
un réglage de l'intensité du champ électrique de l'arc électrique dû à une perturbation est effectué à au moins 60 V/mm,
la hauteur ou le diamètre du canal d'arc électrique (7) est compris dans la plage entre 0,1 et 1 mm et la longueur ou la largeur de la fente est au moins 10 fois supérieure, et
le moyen de déclenchement est réalisé de telle sorte qu'un allumage de l'éclateur (2) entre les électrodes principales (4 ; 5) ne se produit que pour des charges de courant pulsé d'un niveau prédéfini qui garantit que le besoin en tension d'arc électrique est supérieur à la tension de réseau respective.
